# FASCICULE DE BREVET EUROPEEN

(11) **EP 1 837 269 B1**
(45) Date de publication et mention de la délivrance du brevet: **05.11.2008**
(21) Numéro de dépôt: 07103636.2
(22) Date de dépôt: 06.03.2007
(51) Int. Cl.: B62D 25/20

(54) **Structure de véhicule**
Fahrzeugstruktur
Vehicle structure

(30) Priorité: 23.03.2006 FR 0602521
(43) Date de publication de la demande: 26.09.2007
(73) Titulaire: PEUGEOT CITROËN AUTOMOBILES S.A., 78140 Vélizy Villacoublay (FR)
(72) Inventeur: Schmitt, Jean-Charles, 90000 Belfort (FR)

(56) Documents cités:
- DE-A1-0102004 012 50
- FR-A- 2 802 500
- FR-A- 2 859 447
- US-A- 6 022 069
- US-A- 6 129 412

## Description

La présente invention a trait à une structure de véhicule, du type comprenant deux longerons latéraux, chaque longeron de la structure étant relié à un plancher du véhicule.

Les constructeurs automobiles ont pour préoccupation d'assurer la sécurité des passagers d'un véhicule en cas de choc latéral ou frontal sur le véhicule. En particulier, la déformation de la structure du véhicule lors d'un choc doit être maîtrisée afin de limiter le risque de blessures pour les passagers.

C'est pour cela qu'une structure de véhicule, de type cabriolet, telle que divulguée par FR-A-2859447, comporte un plancher qui est lié à la fois à des longerons et à des éléments de renfort du longeron. Ce document divulgue une structure qui correspond au préambule de la revendication 1.

Il est avantageux de favoriser le transfert des efforts résultant d'un choc dans le soubassement du véhicule, de manière à mettre le véhicule en mouvement le plus rapidement possible et à limiter la déformation de l'habitacle. Les voies de transmission d'efforts en partie basse du véhicule peuvent être favorisées en augmentant l'inertie de la section du soubassement du véhicule. Cependant, dans les structures de véhicule classiques, une telle augmentation de l'inertie du soubassement s'accompagne d'une dégradation de l'accessibilité à l'habitacle.

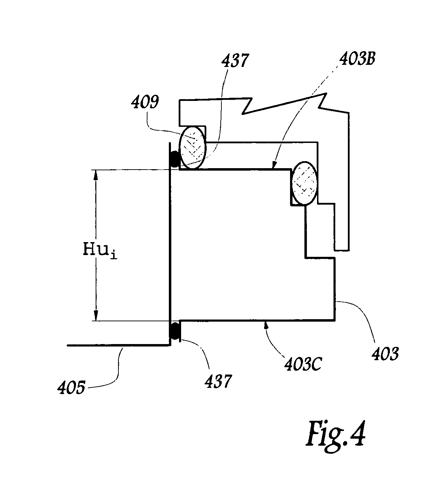

Dans les structures de véhicule de l'état de la technique, dont une coupe partielle schématique est visible à la figure 4, les longerons latéraux 403 sont munis de feuillures externes 437 qui s'étendent au-dessus et en dessous des parois supérieures 403B et inférieures 403C des longerons. Ces feuillures sont utilisées pour la fixation d'un plancher 405 de véhicule sur chaque longeron. Une augmentation de l'inertie de la section du soubassement du véhicule passe par une augmentation de la section de chaque longeron, et notamment par une augmentation de la hauteur utile Huᵢ de chaque longeron. Or, une telle augmentation de la hauteur utile Huᵢ des longerons impose, pour les structures de l'état de la technique, une dégradation rédhibitoire de l'accessibilité au véhicule.

C'est à cet inconvénient qu'entend plus particulièrement remédier l'invention en proposant une structure de véhicule pour laquelle l'inertie de la section du soubassement est importante, avec une accessibilité à l'intérieur du véhicule aisée.

A cet effet, l'invention a pour objet une structure de véhicule, du type comprenant deux longerons latéraux, chaque longeron comportant une paroi supérieure et une paroi inférieure et étant relié à un plancher du véhicule, chaque zone de liaison entre le longeron et le plancher étant située entre lesdites parois supérieure et inférieure du longeron, latéralement et vers l'intérieur de la structure par rapport au longeron, caractérisée en ce que au moins une partie du longeron et au moins une partie du plancher s'étendent chacune sensiblement parallèlement à un plan principal du plancher et sont en recouvrement dans la zone de liaison.

Selon d'autres caractéristiques avantageuses de l'invention :
- la partie du longeron et la partie du plancher précitées sont fixées l'une à l'autre par soudure ;
- le longeron a une section ouverte latéralement vers l'intérieur de la structure, le plancher étant relié au longeron au niveau de l'ouverture du longeron et fermant cette ouverture ;
- le longeron a une section fermée et comporte une feuillure latérale, le plancher étant relié au longeron au niveau de cette feuillure ;
- le longeron comporte au moins une nervure de renfort disposée transversalement par rapport à la section du longeron et s'étendant dans la direction longitudinale du longeron ;
- le longeron est obtenu par extrusion d'une pièce métallique ;
- le longeron comporte une paroi extérieure qui s'étend entre les parois supérieure et inférieure, la paroi extérieure étant apte à recevoir des moyens d'étanchéité assurant la liaison entre le longeron et une porte latérale du véhicule lorsque celle-ci est en position fermée ;
- les moyens d'étanchéité sont fixés sur le longeron ou sur la porte ;
- la structure comporte au moins un montant s'élevant à partir du longeron, ce montant étant encastré dans le longeron.

Les caractéristiques et avantages de l'invention apparaîtront dans la description qui va suivre de plusieurs modes de réalisation d'une structure de véhicule selon l'invention, donnée uniquement à titre d'exemple et faite en se référant aux dessins annexés dans lesquels :
- la figure 1 est une vue partielle en perspective d'une structure de véhicule automobile conforme à un premier mode de réalisation de l'invention, les portes latérales du véhicule ayant été omises pour une meilleure visibilité ;
- la figure 2 est une coupe schématique selon le plan II de la figure 1 ;
- la figure 3 est une coupe analogue à la figure 2 pour une structure de véhicule automobile conforme à un deuxième mode de réalisation de l'invention ;
- la figure 4 est une coupe analogue à la figure 2 pour une structure de véhicule automobile de l'état de la technique.

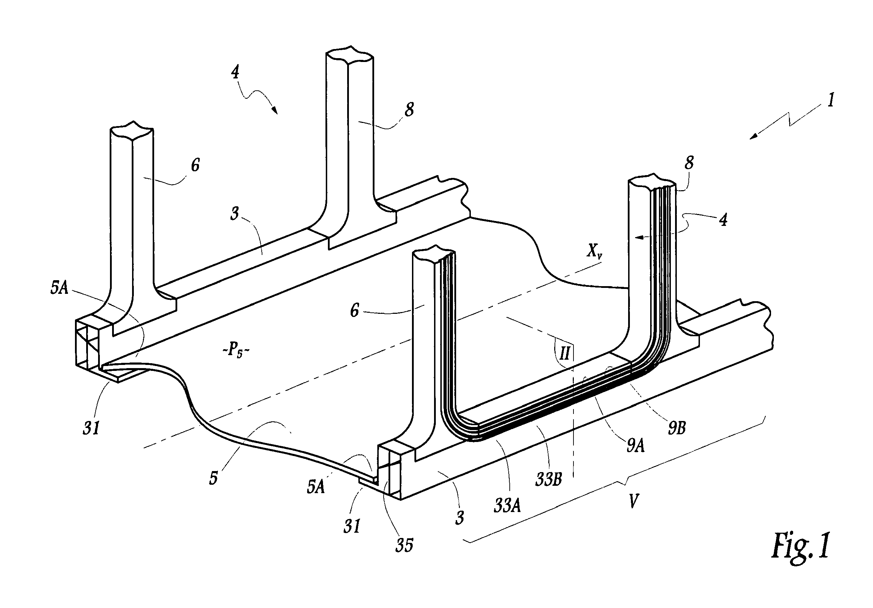

Le véhicule automobile V représenté schématiquement à la figure 1 comprend une structure 1 comportant notamment deux longerons 3. Les longerons 3 s'étendent sensiblement parallèlement à un axe longitudinal et médian Xᵥ du véhicule V et supportent ensemble un plancher 5 du véhicule. La structure 1 comporte également plusieurs pieds de porte, symétriques deux à deux par rapport à l'axe Xᵥ et s'étendant sensiblement verticalement à partir de chaque longeron 3. Sur la figure 1 sont représentés deux pieds de porte avant 6 et deux pieds de porte centraux 8, destinés à supporter respectivement des portes latérales avant et arrière du véhicule V. La structure 1 comprend en outre deux pieds de porte arrière, non représentés sur la figure 1, aptes à recevoir en appui les portes latérales arrières du véhicule V lorsque celles-ci sont en position fermée.

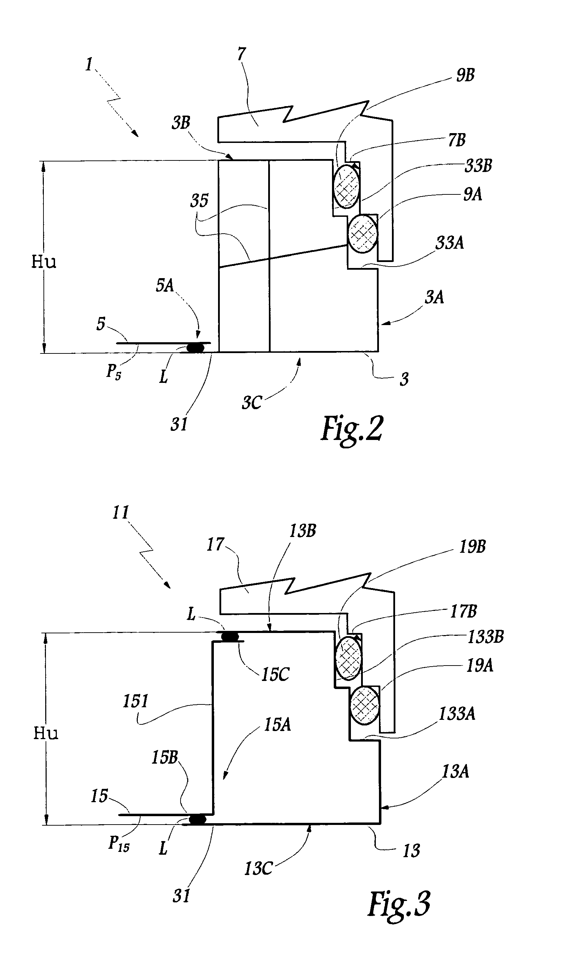

Dans ce mode de réalisation, chaque longeron 3 est constitué d'une pièce de tôle profilée, obtenue par extrusion. Comme visible à la figure 2, chaque longeron 3 a une section fermée globalement rectangulaire et comporte une feuillure externe 31 qui s'étend sensiblement parallèlement à un plan principal P₅ du plancher 5, en direction de l'axe Xᵥ, dans le prolongement de la paroi inférieure 3C du longeron 3. Le plan principal P₅ du plancher 5 est un plan sensiblement horizontal lorsque le véhicule V est sur un terrain horizontal. Chaque bord latéral 5A du plancher 5 est assemblé avec un longeron 3 par recouvrement et par soudure avec une feuillure 31, le long d'une ligne de soudure L. En variante, l'assemblage du longeron 3 et du plancher 5 peut être réalisé par soudure par points.

Chaque porte latérale avant 7 du véhicule V est articulée sur un pied de porte avant 6 du véhicule et mobile entre une position ouverte de libération de l'ouverture 4 délimitée entre les pieds de porte 6 et 8 et une position fermée d'obturation de l'ouverture 4. La paroi extérieure 3A de chaque longeron 3 est apte à recevoir en appui la paroi intérieure 7B de la porte 7 correspondante lorsque celle-ci est en position fermée, comme visible à la figure 2. A cet effet, la paroi extérieure 3A de chaque longeron 3 comporte deux rainures en creux 33A et 33B, complémentaires de la forme de la paroi intérieure 7B de chaque porte 7. Pour chaque longeron 3, deux joints 9A et 9B sont fixés dans les rainures 33A et 33B, de manière à assurer l'étanchéité de l'appui de la porte 7 sur le longeron 3 correspondant. Il en est de même pour les portes latérales arrière du véhicule V, non représentées, qui sont articulées sur les pieds de porte centraux 8.

Selon une variante non représentée de l'invention, les joints 9A et 9B peuvent être fixés sur la paroi intérieure 7B de chaque porte 7, et non sur le longeron 3. Une telle configuration permet de limiter le risque d'arrachement des joints 9A et 9B.

La structure 1 de véhicule conforme à l'invention permet d'obtenir une section importante de chaque longeron 3 du véhicule V sans dégradation de l'accessibilité au véhicule, grâce à la suppression des feuillures 437 supérieures et inférieures des longerons 403 de l'état de la technique représentés à la figure 4. La fixation du plancher 5 et des joints d'étanchéité 9 est réalisée latéralement par rapport aux longerons 3 de l'invention, entre les parois supérieures 3B et inférieures 3C des longerons. De ce fait, les volumes situés au-dessus et en dessous des parois supérieure 3B et inférieure 3C de chaque longeron 3, habituellement réservés à la fixation du plancher 405 et à l'implantation de joints d'étanchéité 409, sont libérés pour permettre une augmentation de la hauteur utile Hu de chaque longeron 3. Ainsi, l'accessibilité au véhicule est identique à celle obtenue avec les structures de véhicule de l'état de la technique, alors que l'inertie de la section du soubassement du véhicule est sensiblement augmentée, grâce à l'augmentation de la hauteur utile Hu de chaque longeron 3.

Chaque longeron 3 comporte dans sa section transversale des nervures 35 de renfort sécantes, destinées à diminuer l'écrasement du longeron 3 en cas de choc latéral. La fabrication des longerons 3 par extrusion permet une implantation aisée des nervures 35 dans la section des longerons 3. En outre, le coût de fabrication par extrusion des longerons 3 de l'invention est sensiblement réduit par rapport au coût de fabrication de longerons classiques de véhicule, qui comprennent des feuillures complexes et ne peuvent pas être obtenus par extrusion.

De manière avantageuse, chaque pied de porte avant 6, central 8 et arrière est encastré au niveau de sa partie basse dans le longeron 3 correspondant. Cet encastrement peut en particulier être réalisé selon la configuration décrite dans WO-A-02/44592. L'encastrement des pieds de porte dans les longerons 3 permet d'améliorer la tenue en torsion de chaque longeron 3.

Dans le deuxième mode de réalisation représenté à la figure 3, chaque longeron 13 de la structure 11 de véhicule est constitué d'une pièce de tôle à section en U mise en forme par pliage ou par extrusion, la section en U du longeron 13 étant ouverte latéralement en direction d'un axe médian du véhicule. Comme dans le mode de réalisation précédent, la paroi extérieure 13A du longeron 13 comporte deux rainures en creux 133A et 133B, complémentaires de la forme de la paroi intérieure 17B d'une porte 17 du véhicule, destinée à venir en appui sur le longeron 13 en position fermée. Deux joints 19A et 19B sont fixés dans les rainures 133A et 133B de manière à assurer l'étanchéité de l'appui de la porte 17 sur le longeron 3. Chaque bord latéral 15A du plancher 15 du véhicule comporte une portion coudée 151 apte à fermer la section ouverte du longeron 13. Le plancher 15 est assemblé avec le longeron 13 selon deux lignes de soudure L, situées respectivement au niveau des parois supérieure 13B et inférieure 13C du longeron 13.

Plus précisément, chaque bord latéral 15A du plancher 15 comporte, de part et d'autre de la portion coudée 151, deux portions 15B et 15C sensiblement parallèles à un plan principal P₁₅ du plancher 15. Les portions 15B et 15C sont assemblées avec le longeron 13 par recouvrement et par soudure avec, respectivement, les parois supérieure 13B et inférieure 13C du longeron 13.

Comme dans le premier mode de réalisation, cette structure 11 de véhicule permet la libération des volumes situés au-dessus et en dessous des parois supérieure 13B et inférieure 13C de chaque longeron 13. Il est ainsi possible d'augmenter la hauteur utile Hu de chaque longeron 13 et l'inertie de la section du soubassement.

Selon des variantes non représentées de l'invention, l'assemblage du plancher du véhicule avec chaque longeron peut être réalisé dans le prolongement de la paroi supérieure du longeron uniquement, ou dans une partie intermédiaire du longeron située entre les parois supérieure et inférieure du longeron.

Quel que soit le mode de réalisation, une structure de véhicule conforme à l'invention permet d'augmenter l'inertie de la section du soubassement du véhicule sans dégradation de l'accessibilité au véhicule. Du fait de l'inertie importante de la section du soubassement, les voies de transmission d'efforts en partie basse du véhicule sont favorisées en cas de choc, ce qui améliore la sécurité des passagers. De plus, grâce à l'augmentation de section des longerons et à l'encastrement des pieds de porte dans les longerons, le soubassement du véhicule a une tenue accrue en flexion, compression et torsion. Une structure de véhicule selon l'invention présente également l'avantage d'être applicable à tout type de véhicule. Enfin, une structure de véhicule conforme à l'invention a un coût de fabrication relativement faible, chaque longeron de la structure étant fabriqué par pliage ou par extrusion d'une pièce métallique.

## Revendications

1. Structure (1 ; 11) de véhicule (V), du type comprenant deux longerons (3 ; 13) latéraux, chaque longeron comportant une paroi supérieure (3B ; 13B) et une paroi inférieure (3C ; 13C) et étant relié à un plancher (5 ; 15) du véhicule, chaque zone (L) de liaison entre le longeron et le plancher étant située entre lesdites parois supérieure et inférieure du longeron, latéralement et vers l'intérieur de la structure par rapport au longeron, **caractérisée en ce qu'**au moins une partie (31 ; 13B, 13C) du longeron (3 ; 13) et au moins une partie (5A ; 15B, 15C) du plancher (5 ; 15) s'étendent chacune sensiblement parallèlement à un plan principal (P₅ ; P₁₅) du plancher et sont en recouvrement dans ladite zone (L) de liaison.

2. Structure de véhicule selon la revendication 1, **caractérisée en ce que** ladite partie (31 ; 13B, 13C) du longeron (3 ; 13) et ladite partie (5A ; 15B, 15C) du plancher (5 ; 15) sont fixées l'une à l'autre par soudure.

3. Structure de véhicule selon la revendication 1 ou 2, **caractérisée en ce que** le longeron (13) a une section ouverte latéralement vers l'intérieur de la structure (11), le plancher (15) étant relié au longeron au niveau de l'ouverture du longeron et fermant cette ouverture.

4. Structure de véhicule selon la revendication 1 ou 2, **caractérisée en ce que** le longeron (3) a une section fermée et comporte une feuillure latérale (31), le plancher (5) étant relié au longeron au niveau de cette feuillure.

5. Structure de véhicule selon l'une quelconque des revendications précédentes, **caractérisée en ce que** le longeron (3) comporte au moins une nervure (35) de renfort disposée transversalement par rapport à la section du longeron et s'étendant dans la direction longitudinale du longeron.

6. Structure de véhicule selon l'une quelconque des revendications précédentes, **caractérisée en ce que** le longeron (3 ; 13) est obtenu par extrusion d'une pièce métallique.

7. Structure de véhicule selon l'une quelconque des revendications précédentes, **caractérisée en ce que** le longeron (3 ; 13) comporte une paroi extérieure (3A ; 13A) qui s'étend entre lesdites parois supérieure (3B ; 13B) et inférieure (3C ; 13C), ladite paroi extérieure étant apte à recevoir des moyens d'étanchéité (9A, 9B ; 19A, 19B) assurant la liaison entre le longeron et une porte latérale (7 ; 17) du véhicule (V) lorsque celle-ci est en position fermée.

8. Structure de véhicule selon la revendication 7, **caractérisée en ce que** les moyens d'étanchéité (9A, 9B ; 19A, 19B) sont fixés sur le longeron (3 ; 13) ou sur la porte (7 ; 17).

9. Structure de véhicule selon l'une quelconque des revendications précédentes, **caractérisée en ce qu'**elle comporte au moins un montant (6, 8) s'élevant à partir du longeron (3 ; 13), ce montant étant encastré dans le longeron.

## Claims

1. Vehicle (V) structure (1; 11), of the type comprising two side rails (3; 13), each side rail comprising an upper wall (3B; 13B) and a lower wall (3C; 13C) and being connected to a floor (5; 15) of the vehicle, each region (L) of connection between the side rail and the floor being located between the said upper and lower walls of the side rail, laterally and towards the inside of the structure relative to the side rail, **characterized in that** at least a part (31; 13B, 13C) of the side rail (3; 13) and at least a part (5A; 15B, 15C) of the floor (5; 15) each run substantially parallel to a main plane (P₅; P₁₅) of the floor and overlap in said connecting region (L).

2. Vehicle structure according to Claim 1, **characterized in that** the said part (31; 13B, 13C) of the side rail (3; 13) and the said part (A; 15B, 15C) of the floor (5; 15) are fixed together by welding.

3. Vehicle structure according to Claim 1 or 2, **characterized in that** the side rail (13) has a cross section that is open laterally towards the inside of the structure (11), floor (15) being connected to the side rail along the opening of the side rail and closing this opening.

4. Vehicle structure according to Claim 1 or 2, **characterized in that** the side rail (3) has a closed cross section and comprises a lateral rebate (31), the floor (5) being connected to the side rail along this rebate.

5. Vehicle structure according to any one of the preceding claims, **characterized in that** the side rail (3) comprises at least one reinforcing rib (35) positioned transversely with respect to the cross section of the side rail and running in the longitudinal direction of the side rail.

6. Vehicle structure according to any one of the preceding claims, **characterized in that** the side rail (3; 13) is obtained from a metal component by extrusion.

7. Vehicle structure according to any one of the preceding claims, **characterized in that** the side rail (3; 13) comprises an outer wall (3A; 13A) which extends between the said upper (3B; 13B) and lower (3C; 13C) walls, the said outer wall being capable of accepting sealing means (9A, 9B; 19A, 19B) that provide the connection between the side rail and a side door (7; 17) of the vehicle (V) when this door is in the closed position.

8. Vehicle structure according to Claim 7, **characterized in that** the sealing means (9A, 9B; 19A, 19B) are fixed to the side rail (3; 13) or to the door (7; 17).

9. Vehicle structure according to any one of the preceding claims, **characterized in that** it comprises at least one post (6, 8) extending up from the side rail (3; 13), this post being set into the side rail.

## Patentansprüche

1. Struktur (1; 11) für ein Fahrzeug (V) des Typs, die zwei seitliche Längsbalken (3; 13) aufweist, wobei jeder Längsbalken eine obere Wand (3B; 13B) und eine untere Wand (3C; 13C) aufweist und mit einem Fußboden (5; 15) des Fahrzeugs verbunden ist, wobei jede Verbindungszone (L) zwischen dem Längsbalken und dem Fußboden zwischen der oberen und der unteren Wand des Längsbalkens seitlich und zum Inneren der Struktur in Bezug zu dem Längsbalken hin liegt, **dadurch gekennzeichnet, dass** sich mindestens ein Teil (31; 13B, 13C) des Längsbalkens (3; 13) und mindestens ein Teil (5A; 15B, 15C) des Fußbodens (5; 15) jeweils im Wesentlichen parallel zu einer Hauptebene (P₅; P₁₅) des Fußbodens erstrecken und sich in der Verbindungszone (L) überlappen.

2. Fahrzeugstruktur nach Anspruch 1, **dadurch gekennzeichnet, dass** der Teil (31; 13B, 13C) des Längsbalkens (3; 13) und der Teil (5A; 15B, 15C) des Fußbodens (5; 15) durch Schweißen aneinander befestigt sind.

3. Fahrzeugstruktur nach Anspruch 1 oder 2, **dadurch gekennzeichnet, dass** der Längsbalken (13) einen seitlich zum Inneren der Struktur (11) offenen Abschnitt hat, wobei der Fußboden (15) mit dem Längsbalken auf dem Niveau der Öffnung des Längsbalkens verbunden ist und diese Öffnung verschießt.

4. Fahrzeugstruktur nach Anspruch 1 oder 2, **dadurch gekennzeichnet, dass** der Längsbalken (3) einen geschlossenen Abschnitt hat und einen seitlichen Falz (31) aufweist, wobei der Fußboden (5) mit dem Längsbalken auf dem Niveau dieses Falzes verbunden ist.

5. Fahrzeugstruktur nach einem der vorhergehenden Ansprüche, **dadurch gekennzeichnet, dass** der Längsbalken (3) mindestens eine Verstärkungsrippe (35) aufweist, die quer in Bezug zu dem Abschnitt des Längsbalkens angeordnet ist und sich in die Längsrichtung des Längsbalkens erstreckt.

6. Fahrzeugstruktur nach einem der vorhergehenden Ansprüche, **dadurch gekennzeichnet, dass** der Längsbalken (3; 13) durch Pressen eines Metallwerkstücks erzielt wird.

7. Fahrzeugstruktur nach einem der vorhergehenden Ansprüche, **dadurch gekennzeichnet, dass** der Längsbalken (3; 13) eine Außenwand (3A; 13A) aufweist, die sich zwischen der oberen Wand (3B; 13B) und der unteren Wand (3C; 13C) erstreckt, wobei die Außenwand Abdichtmittel (9A, 9B; 19A, 19B) aufnehmen kann, die die Verbindung zwischen dem Längsbalken und einer Seitentür (7; 17) des Fahrzeugs sicherstellen können, wenn diese in geschlossener Position ist.

8. Fahrzeugstruktur nach Anspruch 7, **dadurch gekennzeichnet, dass** die Abdichtmittel (9A, 9B; 19A, 19B) auf dem Längsbalken (3; 13) oder auf der Tür (7; 17) befestigt sind.

9. Fahrzeugstruktur nach einem der vorhergehenden Ansprüche, **dadurch gekennzeichnet, dass** sie mindestens einen Ständer (6, 8) aufweist, der sich ausgehend von dem Längsbalken (3; 13) erhebt, wobei dieser Ständer in den Längsbalken eingelassen ist.
